# EUROPÄISCHE PATENTSCHRIFT

(11) **EP 0 336 126 B1**
(45) Veröffentlichungstag und Bekanntmachung des Hinweises auf die Patenterteilung: **13.01.1993**
(21) Anmeldenummer: 89103934.9
(22) Anmeldetag: 06.03.1989
(51) Int. Cl.: G01N 35/00

(54) **Vorrichtung zur Überführung von Teststreifen zu einer Untersuchungseinrichtung**
Device for transferring test stripes to an analyser
Dispositif de transfert de bandes test vers un appareil d'analyse

(30) Priorität: 08.03.1988 DE 3807565
(43) Veröffentlichungstag der Anmeldung: 11.10.1989
(73) Patentinhaber: BOEHRINGER MANNHEIM GMBH, 68298 Mannheim (DE)
(72) Erfinder: Grüner, Hans-Peter, D-6800 Mannheim 1 (DE); Schildhorn, Jürgen, D-6701 Altrip (DE); Sattler, Stephan, D-8135 Söcking (DE)
(74) Vertreter: Fincke, Karl Theodor, Dipl.-Phys. Dr.

(56) Entgegenhaltungen:
- EP-A- 0 180 792
- EP-A- 0 255 070
- EP-A- 0 255 077
- EP-A- 0 255 675
- US-A- 4 721 298

## Beschreibung

Die Erfindung betrifft eine Vorrichtung zur Überführung von Teststreifen nach dem Oberbegriff des Anspruchs 1.

Eine Vorrichtung dieser Art ist nach der EP-A-0 255 070 bekannt. Dort besteht der Wender aus einer um ihre Achse drehbaren Walze mit einer im Querschnitt T-förmigen Schlitzanordnung. Der Querschlitz ist als Durchtrittsöffnung in der Walze vorgesehen, während der Längsschlitz durch die als Sperre wirkende Seitenfläche des Querschlitzes begrenzt ist. Mit der Lageerkennungseinrichtung am Unterende des Vereinzelnerschachts wird die Lage des Testfeldes auf dem Teststreifen festgestellt. Zeigt es in die falsche Richtung, verhindert die Sperre den Weitertransport des Teststreifens. Der Teststreifen wird durch Drehen der Walze um 180° gewendet. Zeigt das Testfeld in die richtige Richtung, wird die Walze so gedreht, daß der Teststreifen ungehindert durch den Querschlitz passieren kann. Die Teststreifen gelangen schließlich mittels einer unter der Walze angeordneten Rutsche auf die Transportvorrichtung. Abhängig von der Beschaffenheit der Teststreifen besteht bei dieser Wendevorrichtung die Möglichkeit, daß Teststreifen beim Wenden zwischen der drehenden Walze und dem ortsfesten Gegenlager, das ein vorzeitiges Herausfallen der Teststreifen verhindert, eingeklemmt werden.

Bei einer ähnlichen, nach der EP-A-0180 792 bekannten Vorrichtung ist der Boden des Sammelraums im wesentlichen durch die Oberfläche eines Schiebers gebildet. Der Schieber weist Quernuten zur Aufnahme der Teststreifen auf. Der Wender befindet sich am Hubende des Schiebers hinter der Abgabestelle des Schiebers. Nicht mit der richtigen Seite nach oben in den Quernuten des Schiebers liegende Teststreifen werden von dem Wender aus den Quernuten herausgehoben und umgedreht. Diese Vorrichtung arbeitet nur mit Teststreifen, die den Quernuten genau angepaßt sind, die nicht wesentlich gekrümmt sind und gegenüber dem auf sie mechanisch einwirkenden Wender stabil sind. Außerdem ist die Steuerung des Schiebers sehr aufwendig.

Aufgabe der Erfindung ist es, eine Vorrichtung nach dem Oberbegriff des Anspruchs 1 mit einer einfach ausgebildeten Wendevorrichtung anzugeben, die auch gebogene Teststreifen und nicht besonders stabile Teststreifen mit der gleichen Seite nach oben weisend zuverlässig der Transportvorrichtung zuführen kann.

Die Lösung dieser Aufgabe ist in Anspruch 1 angegeben.

Der Schacht und die Weiche gestatten die Zuführung unterschiedlich breiter, auch gekrümmter und nicht besonders stabiler Teststreifen zum Schieber. In der Oberfläche des Schiebers brauchen keine Quernuten zu sein.

Eine besonders zuverlässige Vereinzelung der Teststreifen vor der Einführung in den Schacht ist in Anspruch 2, 3 und 4 angegeben. Dabei kann die dritte Walze nach Anspruch 4 gegebenenfalls die einzige Walze sein und kann auch gegebenenfalls unmittelbar der ersten Walze folgen.

Eine zuverlässige Aufnahme der Teststreifen in die Nuten der ersten und/oder zweiten Walze erhält man bei Ausbildung dieser Nuten nach Anspruch 5.

Die Nuten in der dritten Walze sind bevorzugt entsprechend Anspruch 6 ausgebildet, um eine besonders sichere Vereinzelung zu erzielen.

Eine besonders einfache Steuerung der ersten Walze, der zweiten Walze und des periodischen Anhebens des zweiten Bodenabschnitts des Sammelraums ist in Anspruch 7 angegeben.

Um zu vermeiden, daß extrem gekrümmte Teststreifen in den Sammelraum gelangen, ist bevorzugt eine Ausbildung nach Anspruch 8 vorgesehen.

Um die Teststreifen schon an der Abgabestelle des Schiebers befeuchten zu können, ist bevorzugt eine Ausbildung nach Anspruch 9 vorgesehen.

Die Erfindung wird im folgenden an Ausführungsbeispielen unter Hinweis auf die beigefügten Zeichnungen beschrieben.

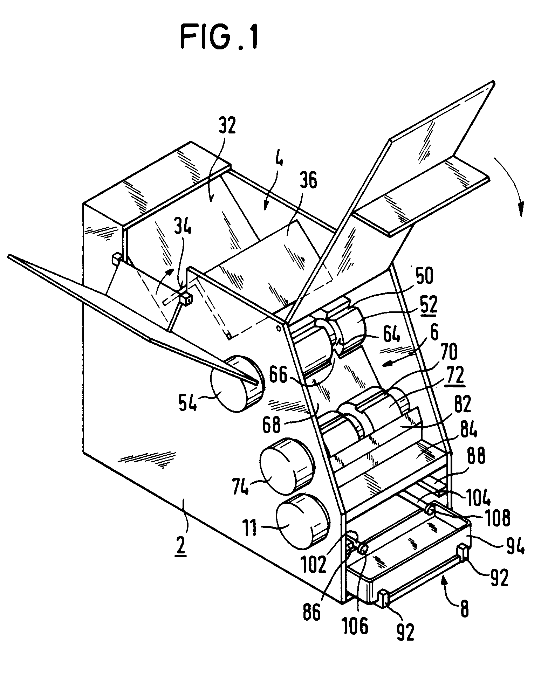

- Fig. 1: zeigt eine perspektivische Ansicht der Vorrichtung.

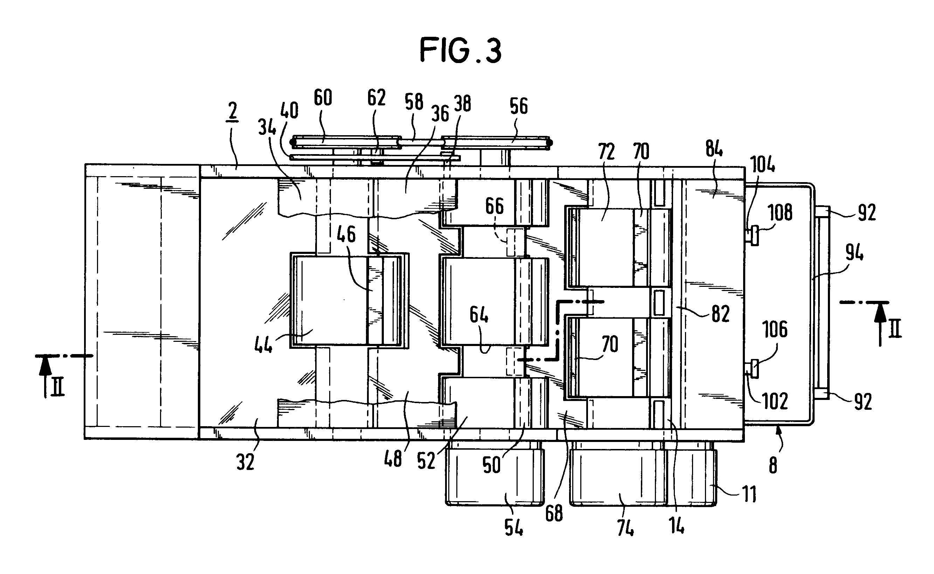

- Fig. 2: zeigt einen Längsschnitt durch die Vorrichtung längs der Schnittlinie II-II in Fig. 3.
- Fig. 3: zeigt einen Schnitt durch die Vorrichtung längs der Schnittlinie III-III in Fig. 2.

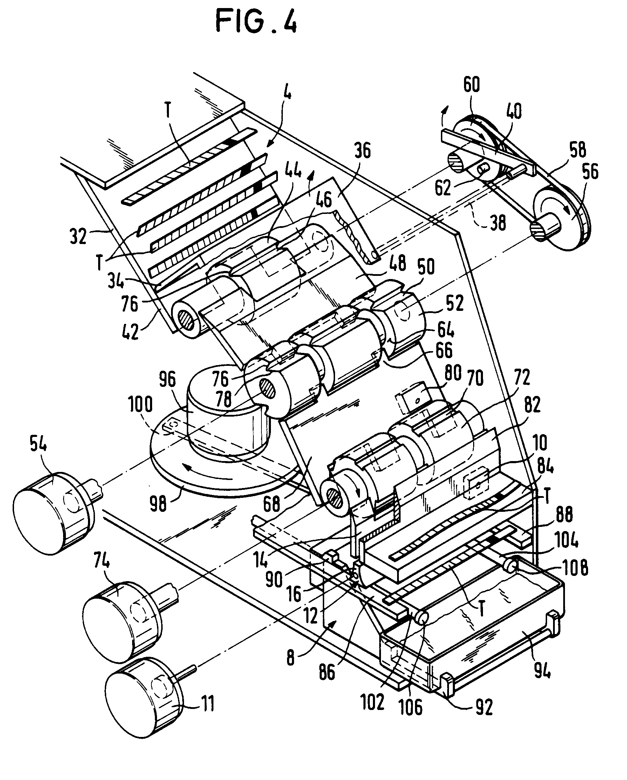

- Fig. 4: zeigt perspektivisch das Zusammenwirken der einzelnen Elemente der Vorrichtung.
- Fig. 5: zeigt vergrößert einen Teil der dritten Walze in ihrem Zusammenwirken mit der zweiten Walze.
- Fig. 6,7 und 8: zeigen eine erste Ausführungsform von Schacht und Weiche in unterschiedlichen Betriebszuständen.
- Fig. 9: zeigt eine zweite Ausführungsform von Schacht und Weiche.
- Fig. 10: zeigt eine dritte Ausführungsform von Schacht und Weiche.

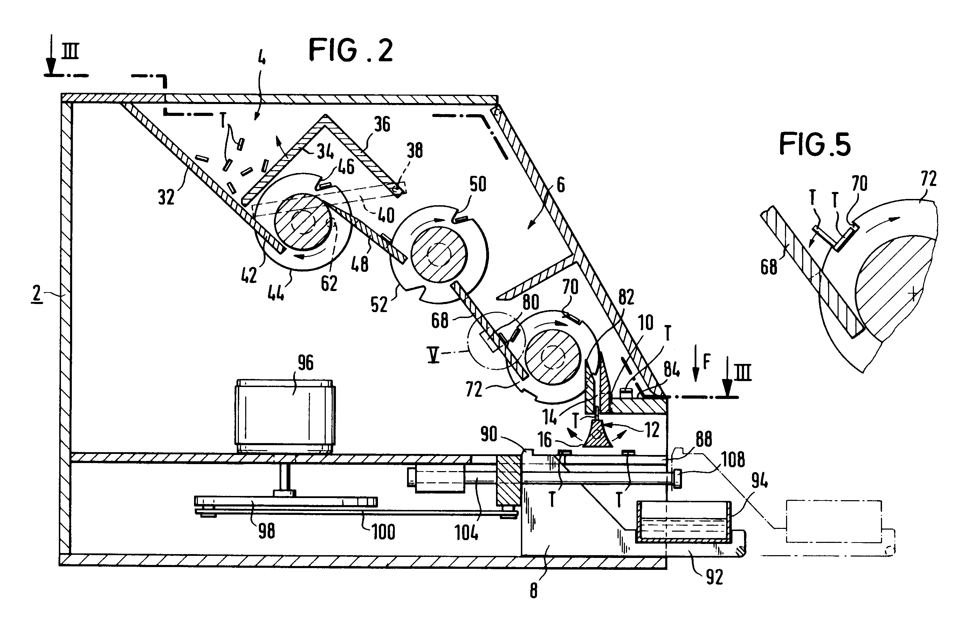

Die Vorrichtung nach dem Ausführungsbeispiel weist ein Gehäuse 2 mit einem Sammelraum 4 zur Aufnahme eines losen, mit gleichen Enden in die gleiche Richtung weisenden Bündels von Teststreifen T auf. Es ist ein Vereinzelner 6 vorgesehen, der die Teststreifen T einzeln einem zwischen einer Aufnahmestelle (Fig. 2 ausgezogene Linien) und einer Abgabestelle (Fig. 2 strichpunktierte Linien) hin- und herbewegbaren Schieber 8 zuführt. Ein von Signalen eines Detektors 10 gesteuerter Wender 12 sorgt dafür, daß alle Teststreifen T in der Abgabestelle mit den gleichen Seiten nach oben weisend auf dem Schieber 8 liegen.

Der Vereinzelner 6 weist einen über der Aufnahmestelle mündenden Schacht 14 auf, aus dem die Teststreifen T einzeln mit einer Längskante nach unten weisend einer von Signalen des Detektors 10 gesteuerten Weiche 16 zugeführt werden, die die Teststreifen T mit gleichen Seiten nach oben weisend auf den Schieber 8 lenkt. Das Verkippen der Weiche 16 erfolgt mittels eines von Signalen des Detektors 10 gesteuerten Motors 11.

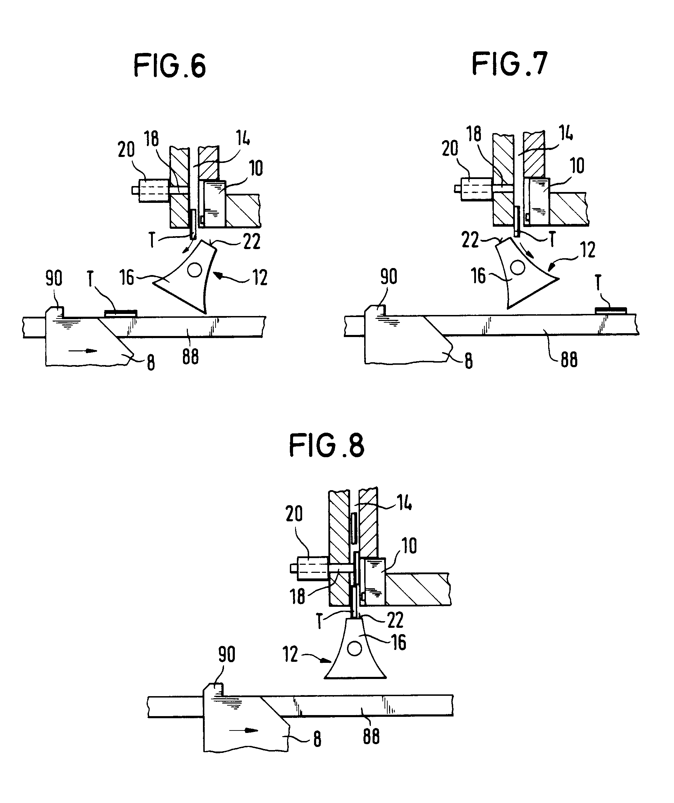

Bei der Ausführungsform nach den Fig. 6 bis 8 ist im unteren Bereich des Schachts 14 gegenüber und oberhalb des Detektors 10 ein in den Schacht einzuführendes Sperrglied 18 für die Teststreifen T vorgesehen, das jeweils einen Teststreifen T festhalten kann und dafür sorgt, daß nur ein vorangehender Teststreifen T zu dem Weichenkörper 16 gelangt. Das Sperrglied 18 wird durch einen Elektromagneten 20 verstellt, der an die Außenseite des Schachts 14 angesetzt ist. Die Steuerung des Elektromagneten 20 erfolgt durch die Signale des Detektors 10.

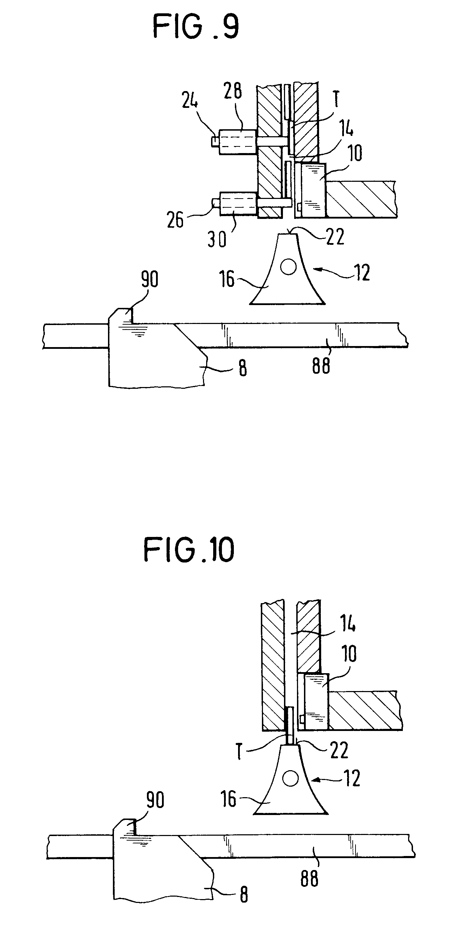

Während bei der Ausführungsform nach Fig. 6 bis 8 die obere Begrenzungsfläche 22 des Weichenkörpers 16 als Widerlager für den vor dem Detektor 10 befindlichen Teststreifen T wirkt, sind bei der Ausführungsform nach Fig. 9 zwei übereinander angeordnete Sperrglieder 24, 26 mit ihnen zugeordneten Elektromagneten 28, 30 vorgesehen. Diese Sperrglieder 24, 26 werden im Wechsel durch die Signale des Detektors 10 mittels der Elektromagneten 28, 30 verstellt. Widerlager für den jeweils untersten Teststreifen T ist in diesem Fall das untere Sperrglied 26.

Bei der Ausführungsform nach Fig. 10 ist überhaupt kein Sperrglied vorgesehen. Es wird sichergestellt, daß in den Schacht 14 jeweils nur ein Teststreifen T gelangt, der dann sein Widerlager an der oberen Begrenzungsfläche 22 des Weichenkörpers 16 findet.

Der Sammelraum 4 weist zwei V-förmig nach unten zusammenlaufende Bodenabschnitte 32, 34 auf. Der Bodenabschnitt 32 ist vorrichtungsfest. Der Bodenabschnitt 34 ist winklig an eine Trägerplatte 36 angesetzt, von der eine im Gehäuse 2 schwenkbar gelagerte Welle 38 ausgeht. Am äußeren Ende der Welle 38 sitzt ein Hebelarm 40 zum Verschwenken des Bodenabschnitts 34 zwecks Freigabe der im Sammelraum 4 befindlichen Teststreifen T durch einen dann vorliegenden Durchlaß zu einer Verlängerung 42 des vorrichtungsfesten Bodenabschnitts 32. Am unteren Ende der Verlängerung 42 läuft eine im Gehäuse 2 gelagerte Walze 44 mit Nuten 46 zur Aufnahme einzelner Teststreifen T, die auf der Verlängerung 42 herunterrutschen.

An die erste Walze 44 grenzt eine die Stirnflächen dieser Walze 44 umfassende, schräg nach unten gerichtete Platte 48 an, die aus den Nuten 46 der Walze 44 abgegebene Teststreifen T aufnimmt und einer Nuten 50 zur Aufnahme einzelner Teststreifen T aufweisenden umlaufenden zweiten Walze 52 zuführt. Die Walze 52 wird von einem ersten Motor 54 angetrieben, auf dessen Ausgangswelle eine Riemenscheibe 56 zum Antrieb eines Riemens 58 sitzt, der eine auf der Welle der Walze 44 sitzende Riemenscheibe 60 antreibt. Der Hebelarm 40 wird entsprechend dem Umlauf der Riemenscheibe 60 von einem an der Riemenscheibe 60 sitzenden Stift 62 angehoben und abgesenkt.

Die zweite Walze 52 weist Umfangsnuten 64 auf, in die die Ansätze 66 einer an die zweite Walze 52 angrenzenden, schräg nach unten gerichteten zweiten Platte 68 ragen. Die zweite Platte 68 nimmt die von den Nuten 50 in der zweiten Walze 52 abgegebenen Teststreifen T auf und führt sie einer Nuten 70 zur Aufnahme einzelner Teststreifen T aufweisenden umlaufenden dritten Walze 72 zu. Der Antrieb der dritten Walze 72 erfolgt mittels eines Motors 74. Die Nuten 46, 50 der Walzen 44, 52 weisen spitzwinklig zueinander verlaufende Begrenzungsflächen 76, 78 auf, von denen die stromaufwärtigen 76 bei der Aufnahme eines Teststreifens T etwa parallel zur Oberfläche der abgebenden Platte 42 bzw. 48 verlaufen, und von denen die stromabwärtigen 78 bei der Abgabe eines Teststreifens T etwa parallel zur Oberfläche der aufnehmenden Platte 48 bzw. 68 verlaufen. In dem dargestellten Ausführungsbeispiel liegen die Ebenen beider Begrenzungsflächen 76, 78 auf ein und derselben Seite der Achsen der ihnen zugeordneten Walzen 44, 52, was sich besonders günstig für die Vereinzelung erwiesen hat.

Die Nuten 70 der dritten Walze 72 weisen einen rechtwinkeligen Querschnitt auf, der etwas tiefer ist als die Dicke der Teststreifen T. Gelangen in diese Nuten 70 zufällig aufeinander zwei Teststreifen T, wie dies in Fig. 5 dargestellt ist, so kippt beim Umlauf der Walze 72 der obere Teststreifen T auf die Platte 68 zurück, um in die nächstfolgende Nut 70 zu rutschen.

Nächst dem unteren Ende der zweiten Platte 68 ist ein auf die Teststreifen T ansprechender Detektor 80 angeordnet, dessen Signale den Umlauf der ersten Walze 44, der zweiten Walze 52 und das periodische Anheben des zweiten Bodenabschnitts 34 des Sammelraums 4 durch Steuerung des Motors 54 steuern.

An die dritte Walze 72 grenzt ein Schälmesser 82 zum Herausholen und Abführen über die Nuten 70 ragender Teststreifen T an. Die herausgeholten Teststreifen T fallen auf einen Sammelplatz 84.

Aus dem Schacht 14 gelangen die Teststreifen T in der gewünschten Lage zunächst auf Trägerarme 86, 88, die die Enden der Teststreifen T abstützen. Von den Trägerarmen 86, 88 werden die Teststreifen T mittels Mitnehmern 90 am Schieber 8 in die Abgabestelle überführt, wo sie eine Benetzung durch von oben auf sie treffende Flüssigkeit (Pfeilrichtung F) erfahren. Der Schlitten 8 trägt auf nach vorne weisenden Armen 92 eine Wanne 94 zur Aufnahme der Flüssigkeit.

Die Hin- und Herbewegung des Schiebers 8 erfolgt mittels eines Motors 96 , der über eine Kurbelscheibe 98 eine an dem Schieber 8 angreifende Kurbelstange 100 antreibt.

Die Führung des Schiebers 8 erfolgt mittels Führungsstangen 102, 104, die an ihren Enden Anschlagköpfe 106, 108 aufweisen.

## Patentansprüche

1. Vorrichtung zur Überführung von Teststreifen (T), die detektierbar unterschiedliche Seiten und Enden aufweisen, zu einer Untersuchungseinrichtung,
mit einem Sammelraum (4) zur Aufnahme eines losen, mit gleichen Enden in die gleiche Richtung weisenden Bündels der Teststreifen (T),
mit einem Vereinzelner (6), der einen Schacht (14) aufweist, in dessen unterem Bereich wenigstens ein in den Schacht (14) einzuführendes Sperrglied (18; 24,26) für die Teststreifen vorgesehen ist, und in dem die Teststreifen (T) einzeln mittels eines an seinem unteren Ende angeordneten Detektors (10) abgetastet werden,
und mit einem von den Signalen des Detektors (10) gesteuerten, unter der Mündung des Schachts (14) befindlichen Wender (12), dem die den Schacht (14) verlassenden Teststreifen (T) einzeln mit einer Längskante nach unten weisend zugeführt werden, und der dafür sorgt, daß alle Teststreifen (T) mit der gleichen Seite nach oben weisend auf einer Transportvorrichtung zu liegen kommen,
**dadurch gekennzeichnet,**
daß die Transportvorrichtung (8) ein zwischen einer Aufnahmestelle und einer Abgabestelle hin- und herbewegbarer Schieber (8) ist,
daß der Wender (12) als Weiche in Gestalt eines schwenkbar gelagerten, im Querschnitt die Form eines Trapezes mit konkaven Seiten aufweisenden Weichenkörpers (16) ausgebildet ist, auf dessen Seiten die Teststreifen (T) mit ihren Seiten entlanggleiten,
und daß durch die Signale des Detektors (10) die Schwenklage dieses Weichenkörpers (16) derart gesteuert wird, daß die Teststreifen (T) mit gleichen Seiten nach oben weisend dem Schieber (8) zugeführt werden.

2. Vorrichtung nach Anspruch 1 dadurch gekennzeichnet, daß der Sammelraum (4) zwei V-förmig nach unten zusammenlaufende Bodenabschnitte (32, 34) aufweist, von denen der erste (32) vorrichtungsfest und der zweite (34) zum Durchlaß der Teststreifen (T) periodisch anhebbar ist und daß der vorrichtungsfeste Bodenabschnitt (32) bis nahe an den Umfang einer Nuten(46) zur Aufnahme einzelner Teststreifen (T) aufweisenden, umlaufenden, ersten Walze (44) verlängert ist (Verlängerung 42).

3. Vorrichtung nach Anspruch 2, dadurch gekennzeichnet, daß an die erste Walze (44) eine schräg nach unten gerichtete erste Platte (48) angrenzt, die aus den Nuten (46) der ersten Walze (44) abgegebene Teststreifen (T) aufnimmt und einer Nuten (50) zur Aufnahme einzelner Teststreifen (T) aufweisenden umlaufenden zweiten Walze (52) zuführt.

4. Vorrichtung nach Anspruch 3, dadurch gekennzeichnet, daß an die zweite Walze (52) eine schräg nach unten gerichtete zweite Platte (68) angrenzt, die aus den Nuten (50) der zweiten Walze (52) abgegebene Teststreifen (T) aufnimmt und einer Nuten (70) zur Aufnahme einzelner Teststreifen (T) aufweisenden umlaufenden dritten Walze (72) zuführt.

5. Vorrichtung nach Anspruch 2 oder 3, dadurch gekennzeichnet, daß die Nuten (46, 50) der ersten und zweiten Walze (44, 52) spitzwinklig zueinander verlaufende Begrenzungsflächen (76, 78) aufweisen, von denen die stromaufwärtige (76) bei der Aufnahme eines Teststreifens (T) etwa parallel zur Oberfläche der abgebenden Platte (42, 48) und von denen die stromabwärtige (78) bei der Abgabe eines Teststreifens (T) etwa parallel zur Oberfläche der aufnehmenden Platte (48, 68) verlaufen.

6. Vorrichtung nach Anspruch 4, dadurch gekennzeichnet, daß die Nuten (70) der dritten Walze (72) einen rechtwinkligen Querschnitt aufweisen, der etwas tiefer ist als die Dicke der Teststreifen (T).

7. Vorrichtung nach Anspruch 4 oder 6, dadurch gekennzeichnet, daß nächst dem unteren Ende der zweiten Platte (68) ein auf die Teststreifen (T) ansprechender Detektor (80) angeordnet ist und daß von Signalen dieses Detektors (80) der Umlauf der ersten Walze (44), der zweiten Walze (52) und das periodische Anheben des zweiten Bodenabschnitts (34) des Sammelraums (4) gesteuert wird.

8. Vorrichtung nach Anspruch 4, 6 oder 7, dadurch gekennzeichnet, daß an die dritte Walze (72) ein Schälmesser (82) zum Herausholen und Abführen von über die Nuten (70) der dritten Walze (72) ragenden Teststreifen (T) angrenzt.

9. Vorrichtung nach einem der vorhergehenden Ansprüche, dadurch gekennzeichnet, daß sich über der Abgabestelle des Schiebers (8) ein Befeuchter (Pfeilrichtung F) für die Teststreifen (T) und unter der Abgabestelle des Schiebers (8) eine Wanne (94) befindet.

## Claims

1. Apparatus for transferring test strips (T), which have detectably different sides and ends, to an examining apparatus,
having a collecting chamber (4) for receiving a loose bundle of test strips (T) in which identical ends point in the same direction,
having a separator (6) which comprises a chute (14) in the lower part of which there is at least one blocking member (18; 24, 26) for the test strips, to be inserted into the chute (14), and in which the test strips (T) are individually scanned by means of a detector (10) arranged at the lower end thereof,
and having a turner (12) controlled by the signals from the detector (10) and located under the mouth of the chute (14), to which the test strips (T) leaving the chute (14) are individually fed with a longitudinal edge pointing downwards, and which ensures that all the test strips (T) come to rest on transporting means with similar sides facing upwards, characterised in that
the transporting means (8) consist of a slide member (8) which is movable back and forth between a receiving station and a delivery station,
the turner (12) is constructed as a deflector in the form of a pivotably mounted deflector body (16) having the cross sectional form of a trapezium with concave sides, the sides of the test strips (T) sliding along the sides of the deflector body (16),
and in that the signals from the detector (10) control the pivotal position of this deflector body (16) so that the test strips (T) are fed to the slide member (8) with similar sides facing upwards.

2. Apparatus according to claim 1, characterised in that the collecting chamber (4) has two base portions (32, 34) which converge downwardly in a V-shape, the first (32) of which is attached to the apparatus whilst the second (34) is capable of being raised periodically to allow the test strips (T) through and the base portion (32) attached to the apparatus is extended close up to the circumference of a rotating first roller (44) which comprises grooves (46) for receiving individual test strips (T) (extension 42).

3. Apparatus according to claim 2, characterised in that adjacent the first roller (44) is a first plate (48) directed diagonally downwards, which receives test strips (T) released from the grooves (46) of the first roller (44) and feeds them to a rotating second roller (52) which comprises grooves (50) for receiving individual test strips (T).

4. Apparatus according to claim 3, characterised in that adjacent the second roller (52) is a second plate (68) directed diagonally downwards, which receives test strips (T) released from the grooves (50) of the second roller (52) and feeds them to a rotating third roller (72) which comprises grooves (70) for receiving individual test strips (T).

5. Apparatus according to claim 2 or 3, characterised in that the grooves (46, 50) of the first and second rollers (44, 52) have boundary surfaces (76, 78) extending at an acute angle to each other, the upstream surface (76), as it receives a test strip (T), extending substantially parallel to the surface of the releasing plate (42, 48) whilst the downstream surface (78), as it releases a test strip (T), extends substantially parallel to the surface of the receiving plate (48, 68).

6. Apparatus according to claim 4, characterised in that the grooves (70) of the third roller (72) have a right-angled cross-section which is somewhat deeper than the thickness of the test strips (T).

7. Apparatus according to claim 4 or 6, characterised in that, nearest the lower end of the second plate (68), there is a detector (80) which is responsive to the test strips (T), signals from said detector (80) controlling the rotation of the first roller (44) and the second roller (52) and the periodic lifting of the second base portion (34) of the collecting chamber (4).

8. Apparatus according to claim 4, 6 or 7, characterised in that, adjacent the third roller (72), is a paring blade (82) for taking out and removing any test strips (T) projecting beyond the grooves (70) of the third roller (72).

9. Apparatus according to one of the preceding claims, characterised in that above the delivery station of the slide member (8) there is a device for moistening (direction of the arrow F) the test strips T and below the delivery station of the slide member (8) there is a tank (94).

## Revendications

1. Dispositif de transfert vers un appareil d'analyse de bandes de test (T) qui présentent des côtés et des extrémités qui diffèrent de manière détectable, comportant une chambre collectrice (4) destinée à recevoir un faisceau lâche de bandes de test (T) dont les extrémités identiques sont tournées du même côté,
un séparateur (6) qui présente un puits (14) dans le domaine inférieur duquel est prévu au moins un organe d'arrêt (18; 24, 26) pour les bandes de test, destiné à être introduit dans le puits (14), et dans lequel les bandes de test (T) sont explorées individuellement à l'aide d'un détecteur (10) disposé à son extrémité inférieure,
et un dispositif de changement de direction (12) commandé par les signaux du détecteur (10) et situé sous l'embouchure du puits (14), auquel sont amenées individuellement les bandes de test (T) qui quittent le puits (14) et dont un bord longitudinal est tourné vers le bas, et grâce auquel toutes les bandes de test (T) viennent reposer sur un dispositif de transport en présentant le même côté tourné vers le haut,
caractérisé
en ce que le dispositif de transport (8) est un coulisseau (8) déplaçable dans un sens et dans l'autre entre un point de réception et un point de distribution,
en ce que le dispositif de changement de direction (12) est agencé à la manière d'un dispositif d'aiguillage constitué par un corps de dispositif d'aiguillage (16) revêtant en section transversale la forme d'un trapèze à côtés concaves sur les côtés duquel les bandes de test (T) glissent sur leurs côtés,
et en ce que la position de pivotement de ce corps de dispositif d'aiguillage (16) est commandée par les signaux du détecteur (10) de telle manière que les bandes de test (T) sont amenées au coulisseau (8) en présentant les mêmes côtés tournés vers le haut.

2. Dispositif selon la revendication 1, caractérisé en ce que la chambre collectrice (4) présente deux sections de fond (32, 34) convergeant vers le bas en forme de V parmi lesquelles la première (32) est fixe sur le dispositif et la seconde (34) est relevable périodiquement pour le passage des bandes de test (T) et en ce que la section de fond (32) fixe sur le dispositif est prolongée jusqu'à proximité de la périphérie d'un premier cylindre (44) rotatif comportant des rainures (46) destinées à recevoir les bandes de test (T) individuelles (prolongement 42).

3. Dispositif selon la revendication 2, caractérisé en ce qu'une première plaque (48) dirigée obliquement vers le bas est contiguë au premier cylindre (44), reçoit les bandes de test (T) délivrées par les rainures (46) du premier cylindre (44) et les conduit à un second cylindre rotatif (52) comportant des rainures (50) destinées à recevoir les bandes de test (T) individuelles.

4. Dispositif selon la revendication 3, caractérisé en ce qu'une seconde plaque (68) dirigée obliquement vers le bas est contiguë au second cylindre (52), reçoit les bandes de test (T) délivrées par les rainures (50) du second cylindre (52) et les conduit à un troisième cylindre rotatif (72) comportant des rainures (70) destinées à recevoir les bandes de test (T) individuelles.

5. Dispositif selon la revendication 2 ou 3, caractérisé en ce que les rainures (46, 50) des premier et second cylindres (44, 52) présentent des surfaces de délimitation (76, 78) dirigées l'une vers l'autre suivant un angle aigu, parmi lesquelles la surface amont (76) s'étend sensiblement parallèlement à la surface de la plaque distributrice (42, 48) lors de la réception d'une bande de test (T) et la surface aval (78) s'étend sensiblement parallèlement à la surface de la plaque réceptrice (48, 68) lors de la distribution d'une bande de test (T).

6. Dispositif selon la revendication 4, caractérisé en ce que les rainures (70) du troisième cylindre (72) présentent une section transversale rectangulaire qui est légèrement plus profonde que l'épaisseur des bandes de test (T).

7. Dispositif selon la revendication 4 ou 6, caractérisé en ce qu'à proximité de l'extrémité inférieure de la seconde plaque (68) est disposé un détecteur (80) qui réagit aux bandes de test (T) et en ce que la rotation du premier cylindre (44) et du second cylindre (52) et le soulèvement périodique de la seconde section de fond (34) de la chambre collectrice (4) sont commandés par les signaux de ce détecteur (80).

8. Dispositif selon la revendication 4, 6 ou 7, caractérisé en ce qu'un racloir (82) destiné à prélever et évacuer les bandes de test (T) qui dépassent des rainures (70) du troisième cylindre (72) est contigu au troisième cylindre (72).

9. Dispositif selon l'une des revendications précédentes, caractérisé en ce qu'il est prévu un humidificateur pour les bandes de test (T) au dessus du point de distribution du coulisseau (8) (sens de la flèche F) et une cuve (94) sous le point de distribution du coulisseau (8).
